# EUROPÄISCHE PATENTANMELDUNG

(11) **EP 1 215 023 A1**
(43) Veröffentlichungstag der Anmeldung: **19.06.2002**
(21) Anmeldenummer: 01129704.1
(22) Anmeldetag: 13.12.2001
(51) Int. Cl.: B29B 17/02, B29B 17/00, B03B 9/06, B09B 3/00

(54) **Aufbereitungseinrichtung für Gegenstände mit flüchtigen Inhaltsstoffen**

(30) Priorität: 16.12.2000 DE 10062947
(71) Anmelder: MeWa Recycling Maschinen und Anlagenbau GmbH, 75395 Ostelsheim (DE)
(72) Erfinder: Pohl, Gert, 73434 Aalen (DE); Hermsdorf, Uwe, 09238 Auerswalde (DE)
(74) Vertreter: Patentanwälte Rüger, Barthelt & Abel

(57) **Zusammenfassung**

Die Zerkleinerungseinrichtung dient in erster Linie dem Recycling von Kühlgeräten. Zu der Aufbereitungseinrichtung gehört eine Zerkleinerungseinrichtung und eine Ausgaseinrichtung. Letztere dient dazu, von der Zerkleinerungseinrichtung abgegebenes Materialgemisch unter inerten Bedingungen abzukühlen, so dass das abgegebene Material zunächst nicht weiter ausgast. Auf diese Weise werden in den angeschlossenen Prozessstufen ungewollte Verluste flüchtiger Substanzen vermieden. Sowohl die Zerkleinerungseinrichtung als auch die Ausgaseinrichtung einschl. Kühlfördereinrichtung sind an eine Auffangeinrichtung für die flüchtige Substanz angeschlossen. Durch die Inertisierung einer Abkühlstrecke, auf der das durch die Zerkleinerung und/oder nachfolgende Beheizung erwärmte Material unter inerten Bedingungen abkühlt, werden Verluste oder ungewollter Austritt von flüchtigen Substanzen aus dem System vermieden.

## Beschreibung

Die Erfindung betrifft eine Aufbereitungseinrichtung zur Materialzerkleinerung und zum Materialaufschluss.

Zum Recycling von Geräten aus dem Hausbereich, Industriebereich und Bürobereich, wie bspw. beim Recycling von Kühlschränken, Gefrierschränken, Kopierern, Druckern und anderen aus unterschiedlichsten Materialien aufgebauten Geräten ist es häufig erforderlich oder zumindest gewünscht, die in den Geräten enthaltenen Materialien möglichst sortenrein zurückzugewinnen. Dies setzt einen Zerkleinerungs- und Trennvorgang voraus.

Die Materialien, aus denen die Geräte aufgebaut sind, sind in der Regel Feststoffe mit unterschiedlichen physikalischen Eigenschaften. Es können massive Metallteile, Blechteile, massive Kunststoffteile, dünnwandige Kunststoffteile, Kunststoffschäume, Matten, Drähte, Drahtgebilde, kompakte Bauteile, biegsame Bauteile, spröde Bauteile usw. enthalten sein. In einigen Fällen muss außerdem damit gerechnet werden, dass die Geräte Flüssigkeiten enthalten, die zumindest bei höheren Temperaturen flüchtig sind. Außerdem können die Geräte Gase enthalten. Diese können bspw. in den Poren von Schäumen eingeschlossen sein, wie bspw. FCKW in Isolierschäumen. Schäume können außerdem weitere oder andere Treibmittel, wie bspw. Pentan, enthalten. Werden die Geräte mechanisch zerkleinert, ist damit zu rechnen, dass Flüssigkeiten und Gase frei werden, die aus unterschiedlichen Gründen, wie bspw. Sicherheitsgründen oder Umweltschutzgründen nicht freigesetzt werden dürfen. In anderen Fällen ist die Rückgewinnung der flüchtigen Substanzen auch aus wirtschaftlichen Gründen anzustreben, damit diese erneut in industrielle Prozesse oder definierte Entsorgungswege rückgeführt werden können.

Davon ausgehend ist es Aufgabe der Erfindung, eine Aufbereitungseinrichtung zu schaffen, mit der sich in dem aufzubereitenden Material enthaltene flüchtige Substanzen möglichst vollständig erfassen lassen.

Diese Aufgabe wird mit der Aufbereitungseinrichtung gemäß Anspruch 1 gelöst.

Die erfindungsgemäße Aufbereitungseinrichtung weist eine Zerkleinerungseinrichtung auf, die die zu recycelnden Geräte in ihre Materialbestandteile zerlegt. Vorhandene Kunststoffschäume werden dabei pulverisiert, wobei die Poren geöffnet werden. In den Poren enthaltenes Gas oder anderweitige flüchtige Substanzen werden somit in der Zerkleinerungseinrichtung frei. An die Zerkleinerungseinrichtung ist eine Auffangeinrichtung angeschlossen, die diese freigesetzten flüchtigen Stoffe abführt und sammelt. Das von der Zerkleinerungseinrichtung abgegebene zerkleinerte Material wird zusätzlich in eine Ausgaseinrichtung überführt, in der es genügend Zeit hat, weiter flüchtige Stoffe abzugeben. In dieser Ausgaseinrichtung kann der Anteil der flüchtigen Stoffe von dem festen Material getrennt werden, der oberflächlich gebunden war. Die Auffangeinrichtung ist auch an die der Zerkleinerungseinrichtung folgende Ausgaseinrichtung angeschlossen und führt die flüchtigen Stoffe ab.

Mit der genannten Maßnahme wird sichergestellt, dass zerkleinertes Material, das in dem Innenraum der Zerkleinerungseinrichtung bereits einen großen Teil seiner flüchtigen Stoffe abgegeben hat, nach Verlassen der Zerkleinerungseinrichtung keine Reste der flüchtigen Stoffe unkontrolliert freisetzt, sondern vielmehr wird die Nachausgasung kontrolliert durchgeführt. Das erhaltene Produkt setzt kaum noch flüchtige Stoffe frei, auch wenn noch weitere Stoffe, bspw. in Kunststoffen oder Kunststoffpartikeln gelöst sind. Das granulierte und pulverisierte Zerkleinerungsprodukt kann deshalb nach Verlassen der Ausgaseinrichtung in teilweise offenen Sortier- und Klassierprozessen weiterbehandelt werden. Bspw. kann es auf Sieben, mit Windsichern oder auf Luftherden, mit offenen Magnetabscheidern und ähnlichen Anlagen sortiert bzw. klassifiziert werden, ohne dass flüchtige Stoffe in nennenswertem Umfang verloren gehen oder in die Atmosphäre gelangen.

Die Zerkleinerungseinrichtung ist vorzugsweise zugleich als Aufschlusseinrichtung ausgebildet. Dies bedeutet, dass die in die Zerkleinerungseinrichtung gegebenen Geräte nicht nur zerkleinert, sondern zugleich so behandelt werden, dass sich verschiedene Stoffe voneinander trennen (Aufschluss). Als Zerkleinerungseinrichtung kommt vorzugsweise ein Querstromzerspaner in Frage, der einen Innenraum mit einem darin umlaufenden Schleuderwerkzeug aufweist. Dieses dient dazu, das in dem Innenraum befindliche Material turbulent aufzuwirbeln, so dass der Zerkleinerungs- und Aufschlussprozess vorwiegend durch Kollisionen der sich ausbildenden Bruchstücke untereinander stattfindet. Es hat sich gezeigt, dass diese Art der Zerkleinerungseinrichtung insbesondere für das Recycling von Geräten und Abfällen geeignet ist, die aus sehr unterschiedlichen Materialien wie Polyurethanschäumen, Polystyrolteilen, Blechen, elektrischen Antrieben und dergleichen zusammengesetzt sind. Die Zerkleinerungs- und Mahlwirkung tritt durch Kollisionen der Bruchstücke untereinander ein, wodurch insbesondere auch an sich nachgiebige Materialien wie Schäume und dergleichen bis zur vollständigen Porenöffnung aufgerieben werden.

Bei Verwendung einer solchen Zerkleinerungseinrichtung ist es vorteilhaft, wenn eine Ausschleuseeinrichtung vorgesehen ist, die das aufgeschlossene Material kontrolliert aus dem Innenraum in die Ausgaseinrichtung überträgt. Dadurch kann sichergestellt werden, dass der Zerkleinerungsprozess jeweils so lange fortgesetzt wird, bis das Material soweit aufgeschlossen ist, dass die Poren geöffnet sind. Mit anderen Worten, die Ausschleuseinrichtung kann dazu dienen, dafür zu sorgen, dass das Material erst dann in die Ausgaseinrichtung überführt wird, wenn es ausreichend zerkleinert ist.

Die Ausgaseinrichtung erhält das zerkleinerte Material in zumindest leicht erwärmten Zustand. Die Erwärmung kann schon bei dem Zerkleinerungsprozess auftreten. Das Material gast in der Ausgaseinrichtung aus und kann anschließend auf eine niedrigere Temperatur gekühlt werden, um eventuelle langsame Nachgasungsvorgänge zu reduzieren, bzw. zu verlangsamen oder noch vorhandene Reste der flüchtigen Substanzen wieder an die Oberfläche der festen Partikel zu binden. Das zerkleinerte Material kann dann teilweise offen weiterbehandelt werden. Die Kühleinrichtung kann dabei bspw. als Kühlförderstrecke ausgebildet sein.

Bei einer bevorzugten Ausführungsform ist in der Ausgaseinrichtung eine Heizförderstrecke oder ein anderweitiger Raum vorgesehen, in dem das ausgasende Gut längere Zeit auf einer erhöhten Temperatur gehalten wird, die das Ausgasen fördert. Dabei ist es vorteilhaft, wenn das ausgasende Gut bewegt oder umgewälzt wird um es aufzulockern und die ausgasenden Partikel jeweils mehrfach an die Oberfläche des Stoffgemischs zu fördern bzw. das Stoffgemisch mit einem Spülgas zu durchmischen. Dieses gilt sowohl für die Heizstrecke als auch die Kühlförderstrecke.

Zur Erfassung und Ableitung der ausgasenden flüchtigen Stoffe dient vorzugsweise ein Inertgas, das wie ein Spülgas über das ausgasende Gut oder durch dieses hindurch geleitet wird. Das Inertgas ist nicht brennbar, explosionshemmend und vorzugsweise Stickstoff. Das Inertgas kann das gleiche Inertgas sein, wie das den Innenraum der Zerkleinerungseinrichtung inertisierende Gas. Die Ausgasung und Spülung mit dem Inertgas ist dann besonders wirksam, wenn das Stoffgemisch in der Ausgaseinrichtung eine Verweildauer von mehr als einer Stunde, vorzugsweise etwa von 1,5 Stunden hat. Der Ausgasungsprozess wird begünstigst, wenn die Temperatur dabei etwa 80°C beträgt. Um diese einzustellen, kann eine Heizeinrichtung vorgesehen sein, bspw. können Flächen, die mit dem Stoffgemisch in Berührung kommen, beheizt sein. Es wird dabei bevorzugt, die Temperatur unter einer Grenze zu halten, bei der erste Bestandteile des Stoffgemischs verkleben oder erweichen.

Als Fördereinrichtung wird vorzugsweise eine Paddelfördereinrichtung oder eine sonstige Fördereinrichtung vorgesehen, die das Materialgemisch langsam fördert und dabei umwälzt, auflockert und mit dem Luftstrom in Berührung bringt. Dies kommt der Entgasung entgegen.

Zu der Auffangeinrichtung gehört vorzugsweise eine Kondensationseinrichtung, die das von dem Inertgas aus dem zerkleinerten Material während des Zerkleinerungsprozess sowie während des Ausgasungsprozess ausgeleitete Gas verflüssigt und abscheidet. Die Kondensationseinrichtung kann eine ausschließlich auf Kältebasis arbeitende Kondensationseinrichtung sein, die Kühlflächen aufweist, an denen die von dem Inertgas mitgeführten flüchtigen Stoffe kondensieren.

Alternativ oder ergänzend kann das mit dem flüchtigen Stoff beladene Inertgas auch komprimiert werden, um die Kondensation zu bewirken. Als Kühleinrichtung dient vorzugsweise eine Stickstoff-Verdampfungseinrichtung, die mit flüssigem Stickstoff gespeist wird. Mit dieser sind sehr niedrige Temperaturen erzeugbar, die auch stark flüchtige Gase, wie FCKW sicher abscheiden. Außerdem kann der verdampfende Stickstoff zur Inertisierung verwendet werden.

Bei einigen Anwendungsfällen sind die flüchtigen Stoffe nahezu ausschließlich in einer bestimmten Fraktion des Zerkleinerungsguts enthalten. Werden bspw. Kühlgeräte zerkleinert, liegt der zur Isolation der Kühlgeräte verwendete Polyurethanschaum nach dem Zerkleinerungsprozess in pulverisierter Form vor. Die flüchtigen Substanzen wie FCKW oder Pentan sind vor allem an diese Fraktion pulverisierten Polyurethans gebunden. Die in den Poren enthaltenen und oberflächlich gebundenen Anteile der flüchtigen Substanzen werden in der Zerkleinerungseinrichtung und der Ausgaseinrichtung freigesetzt und aufgefangen. Weitere Anteile flüchtiger Substanzen können in dem Materialkörper der Polyurethanteilchen enthalten sein. Diese sind dort relativ fest gebunden und werden somit bei nachfolgenden Klassifizierungsprozessen kaum freigesetzt. Sollen jedoch auch diese in der Matrix der Polyurethanteilchen gebundenen flüchtigen Stoffe aufgefangen bzw. rückgewonnen werden, ist es vorteilhaft, wenn noch eine Matrix-Entgasungseinrichtung vorgesehen ist, die bspw. einer Trenneinrichtung nachgeschaltet ist.

Die Matrix-Entgasungseinrichtung wird somit nicht wie die Ausgaseinrichtung mit dem Materialgemisch, sondern nur mit dem Stoff gespeist, der die flüchtigen Substanzen enthält. Dies eröffnet die Möglichkeit, den Stoff hier auf einer höheren Temperatur zu halten, wie bspw. 150°C oder 130°C. Während einer längeren Verweildauer von bspw. 1 bis 2 Stunden können die flüchtigen Stoffe aufgrund der erhöhten Temperatur aus dem Materialkörper heraus diffundieren. Dies erfolgt vorzugsweise in einer Förderstrecke, in der das Material bewegt und umgewälzt sowie aufgelockert wird. Der Entgasungsprozess kann durch Spülung mit Inertgas begünstigt werden, um den Partialdruck der rückzuführenden flüchtigen Substanz im Matrix-Entgasungsraum möglichst niedrig zu halten und die flüchtigen Substanzen abzuführen.

In der Matrix-Entgasungseinrichtung werden die flüchtigen Substanzen relativ langsam freigesetzt. Das aus der Matrix-Entgasungseinrichtung kommende Inertgas ist somit lediglich schwach mit flüchtigen Substanzen beladen. Bei einer bevorzugten Ausführungsform wird es deshalb nachfolgend in die Zerkleinerungseinrichtung eingeleitet, in der der größte Teil des in dem Porenvolumen eingeschlossenen Treibmittels oder einer sonstigen flüchtigen Substanz freigesetzt wird. Die somit doppelte Nutzung des Inertgases gestattet die Verminderung des Inertgasverbrauchs. Es wird dabei als vorteilhaft angesehen, als Inertgas den zugleich als Kühlmittel verwendeten Stickstoff zu nutzen, der bei der Stickstoffverdampfung frei wird. Dieser reine Stickstoff wird vorzugsweise zu erst in die Matrix-Entgasungseinrichtung geführt, um hier die größtmögliche Entgasung zu ermöglichen.

Es ist vorteilhaft, wenn die Entgasung in drei getrennten Prozessstufen nacheinander stattfindet. Dabei ist es zweckmäßig, wenn die Prozesstemperatur von Stufe zu Stufe ansteigt und den Partialdruck der aufzufangenden flüchtigen Substanz von Stufe zu Stufe abnimmt.

Vorteilhafte Einzelheiten und Details einer Ausführungsform der erfindungsgemäßen Aufbereitungseinrichtung ergeben sich aus der Zeichnung, ihrer Beschreibung sowie Unteransprüchen.

In der Zeichnung ist ein Ausführungsbeispiel der Aufbereitungseinrichtung veranschaulicht. Es zeigt:

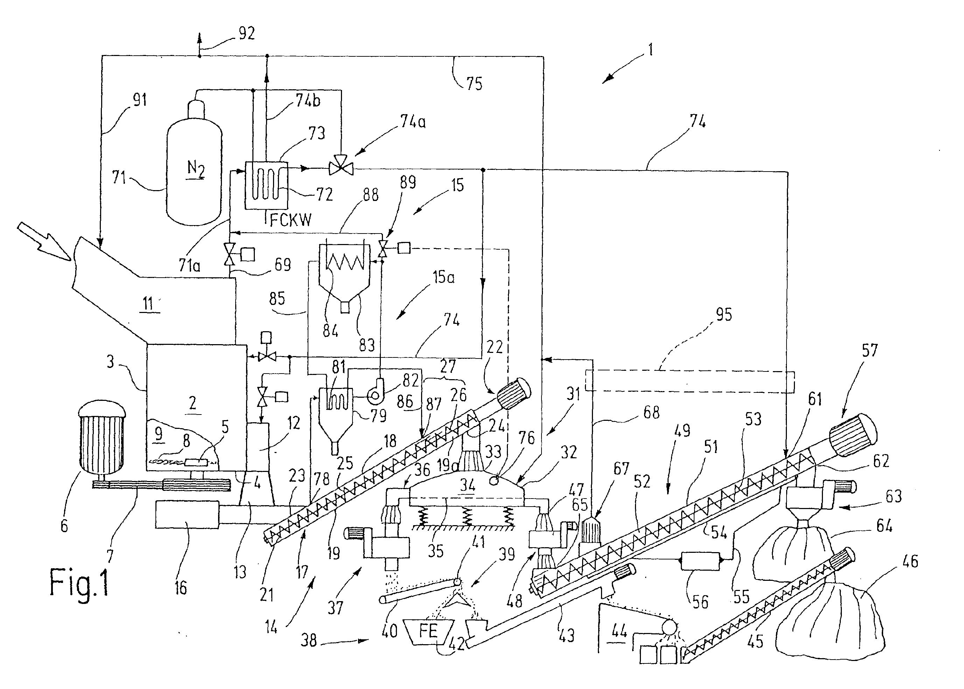

Fig. 1 eine schematische Darstellung der erfindungsgemäßen Aufbereitungseinrichtung.

In Figur 1 ist eine Anlage 1 veranschaulicht, die insbesondere für das Kühlgerätrecycling oder das Recycling anderer Geräte eingerichtet ist, die Bauteile mit flüchtigen Substanzen enthalten. Solche Bauteile sind bspw. FCKW geschäumte Polyurethanschäume, die zur Wärmeisolierung in Kühlschränken dienen.

Die Anlage 1 weist eine Zerkleinerungseinrichtung 2 auf, die als sogenannter Querstromzerspaner ausgebildet ist. Zu diesem gehört ein etwa zylindrisches aufrechtstehendes Gefäß 3, an dessen im Wesentlichen ebenen Boden 4 ein Schleuderwerkzeug umläuft. Zu diesem gehört ein Kopf 5, der über einen Motor 6 und eine Getriebeverbindung 7 drehend angetrieben ist und von dem sich Kettentrume 8 weg erstrecken. In Betrieb werden diese durch Fliehkraft gestreckt gehalten.

Das Gefäß 3 umschließt einen Zerkleinerungsraum 9, der im Wesentlichen geschlossen ist. Eine Beschickungseinrichtung 11 dient dazu, zu recycelnde Geräte oder sonstige Abfälle in den Innenraum 9 einzuführen. Die Zuführungseinrichtung 11 weist dazu einen Zuführkanal auf, der durch eine Schleuse von dem Innenraum 9 getrennt ist. Die Schleuse dient dazu, den Innenraum 9 von der Atmosphäre zu trennen.

Um zerkleinertes Material aus dem Innenraum 9 auszuleiten, ist eine Ausschleuseeinrichtung 12 vorgesehen, die seitlich an der Wandung des Gefäßes 3 angeordnet ist. Die Ausschleuseeinrichtung 12 ist bspw. durch einen motorbetätigten Schieber gebildet, der einen Austrageöffnung von Zeit zu Zeit freigibt, um zerkleinertes Material aus dem Innenraum 9 in einen Pufferbehälter 13 auszulassen. Die Ausschleuseeinrichtung 12 und oder Pufferbehälter verbinden die Zerkleinerungseinrichtung 2 mit einer Ausgaseinrichtung 14.

Die Zerkleinerungseinrichtung 2 ist im Wesentlichen geschlossen aufgebaut. Ihre Innenatmosphäre ist inertisiert. Dazu dient eine Einrichtung zur Einleitung von Inertgas (N₂) in die Zerkleinerungseinrichtung 2. An diese ist eine Auffangeinrichtung 15 angeschlossen, die mit der Zerkleinerungseinrichtung 2 und vorzugsweise auch in der Ausschleuseeinrichtung 12 sowie in der Ausgaseinrichtung 14 vorhandenen Atmosphäre verbunden ist. Die Auffangeinrichtung 15 ist an späterer Stelle detaillierter erläutert.

Die Ausgaseinrichtung 14 weist eine Stopfpumpe 16 auf, mit der das zerkleinerte Material aus dem Pufferbehälter 13 einer Paddelfördereinrichtung 17 zugeführt wird. Die Stopfpumpe 16 erzeugt in einem Kanal zwischen dem Pufferbehälter 13 und der Fördereinrichtung 17 einen Propfen aus zerkleinertem Material. Dieser Pfropfen bildet eine Barriere zur Trennung des Innenraums 19 der Fördereinrichtung 17 von dem Innenraum der Zerkleinerungseinrichtung 2. Auf diese Weise kann die Innenatmosphäre der Fördereinrichtung 17 von dem Gasvolumen vorgelagerte Prozesse getrennt werden - es können sehr unterschiedliche Konzentrationen flüchtiger Stoffe auftreten, ohne dass die Ausgasung gestört wird.

Die Fördereinrichtung 17 weist ein längliches, vorzugsweise schräg ansteigend angeordnetes Rohr 18 auf, das einen Innenraum 19 umschließt. Dieser bildet einen Ausgasraum für das von der Fördereinrichtung 17 geförderte Gut. In dem Rohr 18 ist eine Paddelschnecke 21 angeordnet, die über einen Getriebemotor 22 in langsame Drehung versetzt ist. Sie weist ein Zentralrohr auf, von dem sich flossenartige Paddel oder Spaten radial weg erstrecken.

Das Rohr 18 weist an seinem unteren Ende einen seitlichen Eingang 23 auf, der mit der Stopfpumpe 16 verbunden ist. Über diesen Eingang 23 wird der Ausgaseinrichtung 17 Material zugeführt. An seinem oberen Ende weist das Rohr 18 einen Ausgang 24 auf, an dem die Fördereinrichtung 17 weitgehend entgastes Material abgibt.

Die Paddelschnecke 21 ist in einem Abschnitt, der sich in Förderrichtung ausgehend von dem Eingang 23 über etwa zwei Drittel bis drei Viertel der Länge der Förderschnecke erstreckt, vorzugsweise mit einer beheizbaren Mantelfläche versehen. Die Paddelschnecke 21 dient hier als Heizeinrichtung 25, für das zu entgasende Gut. Zugleich dient die Paddelschnecke 21 dem Transport und der Umwälzung des zu entgasenden Guts.

Die Paddelschnecke 21 ist nur über einen Teil ihrer Länge beheizt. Auf ihrem letzten, sich bis zu dem Ausgang 24 erstreckenden Abschnitt 26, der etwa ein Viertel bis ein Fünftel der Länge der Paddelstrecke 22 ausmacht, ist die Paddelschnecke 21 nicht beheizt. Dieser Abschnitt dient als Abkühlstrecke, in dem sich das zu fördernde Gut etwa auf Umgebungstemperatur abkühlen kann. Die Paddelschnecke 21 bewirkt hier die Förderung und die Auflockerung und Umwälzung des Materials, wodurch in Gegenstrom über den Ausgang 24 eintretende Spülluft oder Spülgas durch das Material strömen kann.

Die Fördereinrichtung 17 bildet somit mit ihrem dem Ausgang 24 vorgelagerten Abschnitt eine Kühleinrichtung 27, zu der der Abschnitt 26 und ein entsprechender Abschnitt des Rohrs 18 gehört. Der hier umschlossene Innenraum 19a bildet einen Kühlraum zur Temperierung bzw. Abkühlung des zuvor durch die Zerkleinerung erwärmten Guts.

Der Abschnitt 26 der Paddelschnecke 21 bildet eine Kühlförderstrecke. Dagegen bildet der Abschnitt 25 der Paddelschnecke 21 eine Heizförderstrecke oder zumindest eine Warmhalteförderstrecke, in der das von der Zerspanungseinrichtung 2 abgegebene Gut auf einer erhöhten Temperatur gehalten und in der es umgewälzt wird.

An die Ausgaseinrichtung 14 schließt sich eine Klassiereinrichtung 31 an, deren erstes Glied bei der veranschaulichten Ausführungsform ein Rüttelsieb 32 ist. Dieses weist ein geschlossenes Gehäuse auf, an dessen Oberseite ein an den Ausgang 24 angeschlossener Eingang 33 vorgesehen ist. Dieser führt in einen nach außen einigermaßen abgeschlossenen Innenraum 34, in dem ein horizontales Sieb 35 angeordnet ist, aber dem Sieb 35 kann ein Stufenrost angeordnet sein. Durch das Sieb 35 fallendes Material sammelt sich auf dem Boden des Gehäuses 32 des Rüttelsiebs, während grobere Materialpartikel über das Sieb 35 oder den Stufenrost als Grobfraktion ausgeleitet werden. Aus dem oberhalb des Siebs 35 gelegenen Teilraum des Innenraums 34 führt ein Ausgang 36 über eine Zellenradschleuse 37 grobere Materialpartikel heraus und gibt diese an eine Sortiereinrichtung 38 ab. Zu der Sortiereinrichtung 38 gehört ein Magnetabscheider 39, dessen Förderband 40 um eine Magnetrolle 41 herumgeführt ist. Magnetische Partikel werden deshalb unter einem anderen Winkel von dem Förderband 40 abgeworfen als nichtmagnetische Partikel. Entsprechend werden magnetische Partikel in einem Container 42 gesammelt, während nichtmagnetische Partikel über eine Förderstrecke 43 an eine weitere Sortiereinrichtung 44 abgegeben werden. Diese trennt nochmals magnetische und nichtmagnetische Metalle sowie Partikel geringer Dichte, wie bspw. Polystyrol. Diese werden über eine Förderstrecke 45 in ein entsprechendes Gefäß, bspw. einen Beutel 46 gefördert.

Durch das Sieb 35 fallende, sich auf den Boden sammelnde, Partikel werden über einen Ausgang 47 und eine Zellenradschleuse 48 an eine Matrix-Entgasungseinrichtung 49 abgegeben. Die Zellenradschleuse 48 bildet gemeinsam mit einem in dem Gehäuse 32 kontrolliert eingestellten Strömungsprofil eine Barriere zur Trennung von Innenräumen mit sehr unterschiedlichen Konzentrationen flüchtiger Stoffe voneinander.

Die Maschenweite des Siebs 35 ist so eingestellt (z.B. 1mm), dass durch seine Maschen nur kleinste Partikel hindurchfallen, wie sie beim Aufschluss von Schäumen, bspw. FCKW geschäumten Polyurethanschäumen entstehen. Diese staubartigen Partikel werden somit schon durch das Rüttelsieb sortenrein abgetrennt.

Die Matrix-Entgasungseinrichtung 49 ist im vorliegenden Ausführungsbeispiel wiederum durch eine Schnecken- oder Paddelfördereinrichtung gebildet. Sie weist ein rohrförmiges Gehäuse 51 auf, in dessen Innenraum 52 eine Paddelschnecke 53 drehbar gelagert ist. Die Wandung des Rohrs 51 ist doppelwandig oder zumindest abschnittsweise mit Heizkanälen 54 versehen. Diese sind an einen Ölkreislauf 55 angeschlossen, der über einen Ölumlauferhitzer 56 führt. Damit wird der Ölkreislauf 55 auf einer solchen Temperatur gehalten, dass sich in dem Innenraum des Rohrs 51 etwa eine Temperatur von 130°C einstellt.

Die Paddelschnecke 53 ist durch einen Motor 57 so angetrieben, dass das die Förderstrecke durchlaufende Material etwa 1,5 bis 3 Stunden in dem Innenraum 52 verbringt, wobei es durch die Paddelschnecke 53 ständig umgewälzt wird.

Das rohrförmige Gehäuse 51 weist einen Eingang 61 für ein Spülgas, wie bspw. Stickstoff, auf. Dieser Eingang 61 ist bezüglich der Förderrichtung kurz vor einem Ausgang 62 des Rohrs 51 vorgesehen, der über eine Zellenradschleuse 63 zu einem Materialsammelgefäß 64 führt.

Das untere Ende des geneigt angeordneten rohrförmigen Gehäuses 51 ist mit einem seitlichen Eingang 65 versehen, der an die Zellenradschleuse 48 angeschlossen ist und über den die ausgesiebte Feinfraktion der Siebeinrichtung in die Matrix-Entgasungsstrecke gegeben wird. In der Nähe des Eingangs 65 ist ein Ausgang 67 vorgesehen, über den das durch die Matrix-Entgasungseinrichtung 49 geleitete Spülgas aus dem Rohr 51 entnommen wird. Der Eingang 61 und der Ausgang 67 sind mit der Auffangeinrichtung 15 verbunden, die wie folgt aufgebaut ist:

Die Auffangeinrichtung 15 dient dazu, das beim Zerkleinern der Altgeräte und damit beim Aufschluss Schäumen bis zur Porenöffnung aus den Schäumen austretende FCKW aufzufangen. Sie dient weiter dazu, dass in der Ausgaseinrichtung 14 freiwerdende oberflächlich gebundene FCKW aufzufangen. Schließlich dient sie dazu, dass in der Matrix-Entgasungseinrichtung 49 freiwerdende FCKW aufzufangen, das zuvor in die Kunststoffpartikelchen diffundiert war und aus diesen wieder herausdiffundiert ist.

Zu der Auffangeinrichtung 15 gehört ein Tank 71 für flüssigen Stickstoff. Aus diesem Tank gelangt dosiert Stickstoff in die Kühlschlange 72, die in einem Kondensationsgefäß 73 angeordnet ist. Der Stickstoff verdampft in der Kühlschlange 72 oder gelangt zumindest als kalter Dampf in diese. In dem Kondensationsgefäß 73 schlägt sich deshalb an der Kühlschlange 72 FCKW nieder, das mit einem Trägergas, bspw. Stickstoff, vermischt in das Kondensationsgefäß 73 geleitet worden ist.

Von der Kühlschlange 72 führt eine Leitung 74 reinen gasförmigen Stickstoff mit niedriger Temperatur zu einem Regulierventil 74a. Dieses ist außerdem mit dem Tank 71 verbunden und speist die Leitung 74 mit gasförmigem Stickstoff. Die Leitung 74 führt zu dem Eingang 61. Der Stickstoff durchströmt die Matrix-Entgasungseinrichtung 49 im Gegenstrom zu dem geförderten Materialstrom und nimmt dabei ausgasende FCKW und/oder andere flüchtige Substanzen mit. An dem Ausgang 67 steht Stickstoff mit einem gewissen, niedrigen FCKW-Gehalt an. An dieser Stelle kann außerdem eine nicht weiter veranschaulichte Messeinrichtung vorgesehen sein, um den Sauerstoffgehalt des aus der Matrix-Entgasungseinrichtung 49 herauskommenden Gases zu überprüfen. Dieser soll möglichst gering sein, so dass das Spülgas (N₂) inerte Verhältnisse sicherstellt.

Sowohl die Ausschleuseeinrichtung 12 als auch die Zerkleinerungseinrichtung 2 sind zur Inertisierung an die Leitung 74 angeschlossen. Das Spülgas dient der Inertisierung der Zerkleinerungseinrichtung 2, der Materialausschleuseeinrichtung 12 und des Puffervolumens 13.. In diesen Einrichtungen nimmt das Spülgas große Anteile hier freiwerdernder FCKW auf. Über einen Ausgang 69 der Zerkleinerungseinrichtung 2 bzw. einer vorgelagerten Materialschleuse und ein Regulierventil gelangt das FCKW beladene Spülgas nun mittels einer Leitung 71a in das Kondensationsgefäß 73. Hier werden die enthaltenen FCKW niedergeschlagen und gesammelt. Dabei wird das Spülgas zugleich von den mitgeführten FCKW-Anteilen weitgehend vollständig befreit.

Über eine Leitung 74b verlässt das soweit gereinigte Spülgas das Kondensationsgefäß 73. Es gelangt über eine Verzweigung 75 der Leitung 74b als Grundinertisierung in den Innenraum 34 der Siebeinrichtung 31. Um dessen Innendruck, der etwa dem Umgebungsdruck entsprechen soll, zu regulieren, ist hier ein Drucksensor 76 angeordnet. Aus dem Innenraum 34 gelangt das Spülgas über den Ausgang 24 in die Ausgaseinrichtung 14.

Das aus der Matrix-Entgasungseinrichtung kommende Gas (Ausgang 67) wird über die Leitung 68 entweder in die Verzweigung 75 oder das Kondensationsgefäß 73 geleitet. Letzteres ist bevorzugt, um FCKW-Verluste gering zu halten.

Die Ausgaseinrichtung 14 ist an einen Abschnitt 15a der Auffangeinrichtung 15 angeschlossen, der einen eigenen Kondensationskreislauf enthält. Die Fördereinrichtung 17 weist in der Nähe ihres Eingangs 23 einen Ausgang 78 auf, von dem eine gasführende Leitung zu einem Kondensationsgefäß 79 führt. In diesem ist eine Kühlschlange 81 angeordnet, die von kühlem Gas durchströmt und somit kaltgehalten wird, um in dem Trägergas, das das Kondensationsgefäß 79 durchströmt, enthaltene flüchtige Bestandteile wie FCKW niederzuschlagen. Aus dem Kondensationsgefäß 79 führt eine Leitung zu einem Gebläse 82 und von diesem zu einem weiteren Kondensationsgefäß 83.

Das Kondensationsgefäß 83 beherbergt eine Kühlschlange 84, die von einem Kältemittel durchströmt ist und auf einer Temperatur von ungefähr 5°C gehalten wird. Hier schlagen sich weitere Anteile flüchtiger Substanzen (FCKW) nieder und sammeln sich in dem Kondensationsgefäß 83. Das Trägergas, das das Kondensationsgefäß 83 durchströmt, kühlt dabei an der Kühlschlange 84 ab und gelangt über eine Leitung 85 an den Eingang der Kühlschlange 81. In dieser tritt es mit dem Gas in Wärmeaustausch, das das Kondensationsgefäß 79 durchströmt. Auf diese Weise erwärmt sich das durch die Kühlschlange 81 fließende Gas und gelangt letztendlich durch eine Leitung 86 an einen Eingang 87 an dem Rohr 18. Der Eingang 87 ist etwa dort angeordnet, wo die Heizstrecke der Förderschnecke 25 endet.

Aus der von dem Gebläse 82 zu dem Kondensationsgefäß 83 führenden Leitung zweigt eine Teilleitung 88 ab. In dieser ist ein Regulierventil 89 angeordnet, mit dem die dem Teil 15a der Auffangeinrichtung abströmende und somit auch die diesem Teil zuströmende Spülluft oder Spülgasmenge reguliert wird. Dazu ist das Regulierventil 89 mit dem Drucksensor 76 verbunden. Es wird so eingestellt, dass in dem Innenraum 34 etwa Umgebungsdruck herrscht.

Die Leitung 88 führt zu der Leitung 71a und somit zu dem Kryokondendator, d.h. dem Kondensationsgefäß 73.

Das das Kondensationsgefäß 73 über die Leitung 74b verlassende Gas verzweigt außer auf die Zweigleitung 75 zusätzlich auf eine Zweileitung 91, die in den Materialaufgabeschacht führt und die außerdem ggfs. über ein Abluftventil zu einer Abluftleitung 92 führt. Über diese wird letztendlich das Trägergas, das die Auffangeinrichtung 15 durchströmt hat und in der Kyrokondensationseinrichtung gereinigt worden ist, ins Freie entlassen.

Die insoweit beschriebene Aufbereitungseinrichtung 1 arbeitet wie folgt:

In Betrieb werden aufzubereitende Geräte ständig oder schubweise in die Zerkleinerungseinrichtung 2 gegeben. In dieser wirbeln die Kettentrume 8 die Geräte turbulent auf, so dass diese durch die auftretenden Kollisionen letztendlich zerfallen bzw. zerrissen werden. Bei diesem Vorgang trennen sich die verbauten Materialien voneinander, d.h. es findet ein vollständiger Materialaufschluss statt. Der Aufschluss geht so weit, dass vorhandene Schäume pulverisiert werden, d.h. zumindest bis zur Porenöffnung zerkleinert werden.

Über die Leitung 68 strömt der Zerkleinerungseinrichtung 2 und der Ausschleuseeinrichtung 12 ständig Stickstoff zu, der kein oder nur wenig FCKW enthält. Dadurch wird die in der Zerkleinerungseinrichtung 2 und in der Ausschleuseeinrichtung 12 sowie dem Puffervolumen 13 vorhandene Atmosphäre vollständig inertisiert, d.h. die Geräte sind mit einer Stickstoffatmosphäre gefüllt.

Bei der Zerkleinerung insbesondere der Schäume werden, wenn die Poren geöffnet werden, die darin enthaltenen FCKW-Portionen frei. Mit dem Trägergas gelangt dieses FCKW über die Leitung 71a in das Kondensationsgefäß 73 und wird hier bei einer Temperatur von weniger als - 100°C kondensiert und aufgefangen. Der Gasstrom aus der Zerkleinerungseinrichtung 2 beträgt dabei ungefähr 250m³/h. Ein Teilstrom von etwa 50m³/h wird dabei über die Leitung 68 in die Zerkleinerungseinrichtung 2 und die Ausschleuseeinrichtung 12 eingeführt. Der größere Teil von etwa 200m³/s gelangt über die Zweigleitung 91 in die Zerkleinerungseinrichtung 2.

Ist der Zerkleinerungsprozess in der Zerkleinerungseinrichtung 2 so weit fortgeschritten, dass die in dem Gerät vorhandenen Materialien vollständig voneinander getrennt sind und der gewünschte Zerkleinerungsgrad erreicht ist, wird das entstandene Materialgemisch über die Ausschleuseeinrichtung 12, das Puffervolumen 13 und die Stopfpumpe 16 in die Ausgaseinrichtung 14 gegeben, deren Innenraum 19 durch einen Materialpfropfen von den vorgelagerten Volumina getrennt ist. In der Ausgaseinrichtung 14 wird das Material in der Heizstrecke zunächst noch längere Zeit (etwa 1 Stunde) auf erhöhter Temperatur gehalten, umgewälzt und im Gegenstrom von Stickstoff durchströmt. In diesem Bereich wird vor allem solches FCKW von dem Trägergas aufgenommen, das zuvor an den Schäumen oberflächlich gebunden war.

Nach passieren des Eingangs 87 gelangt das zerkleinerte Material in eine inerte Kühlstrecke, in der es von einer Temperatur von etwa 80° auf etwa Umgebungstemperatur oder darunter abkühlt. Die Kühlung wird in erster Linie durch kaltes oder kühles, aus der Siebeinrichtung 31 kommendes Inertgas bewirkt. Aus dem Innenraum 34 strömt dieses über den Ausgang 24 in die Kühlförderstrecke 27 und durchströmt das entgegenkommende und zerkleinerte Material. In der inerten Kühlstrecke hört das Ausgasen des zerkleinerten Schaums, der eine Fraktion des geförderten Materialgemisch bildet, allmählich auf.

Das in der Ausgaseinrichtung 14, insbesondere in der Heizstrecke und in der Kühlförderstrecke 27 abgegebene FCKW gelangt in den Teilkreislauf 15a und wird dort zweistufig kondensiert. Die Kondensation beginnt in dem Kondensationsgefäß 79, das zugleich als Wärmetauscher dient und eine Temperatur von ungefähr 20°C an dem Ausgang (Zustrom zu dem Gebläse 82) einstellt. Die weitere Kondensation findet in dem Kondensationsgefäß 83 statt, das durch die Kühlschlange 84 auf ungefähr 5°C gehalten wird. Aus dem Teilkreislauf 15a gelangt dann, geregelt durch das Regulierventil 89, ein Trägergasstrom von etwa 50m³/h zu dem Kondensationsgefäß 73. Die genaue Größe dieses Teilgasstroms reguliert das Regulierventil 89 anhand des Innendrucks des Innenraums 34, so dass über etwaige Undichtigkeiten der Zellenradschleusen 37, 48 weder Luft angesaugt noch Stickstoff abgegeben wird.

In der Siebeinrichtung 31 wird aus dem Materialgemisch, insbesondere das FCKW-haltige Material abgetrennt. Dies ist vor allem der Polyurethanschaum, der in der Zerkleinerungseinrichtung 1 bis zur Porenöffnung pulverisiert worden ist. Andere Bestandteile, wie kompakte Kunststoffe oder Metalle, granulieren zu einer groberen Korngröße. Demnach gelangt in erster Linie pulverisierter Polyurethanschaum über die Zellenradschleuse 48 in die Matrix-Entgasungseinrichtung 49, in der eine letzte Entgasung unter inerten Bedingungen stattfindet. Die Zellenradschleuse 48 bildet eine Barriere zur Trennung von Atmosphären mit unterschiedlichen FCKW-Konzentrationen. Die Materialtrennung in der Siebeinrichtung 31 konnte dagegen in quasi offener Betriebsweise vorgenommen werden. Die Inertisierung der Siebeinrichtung 31 ist nicht zwingend. Die Materialtrennung kann auch offen erfolgen, denn durch das inerte Kühlen sind nachfolgende weitere Ausgasprozesse bei Umgebungsdruck und -temperatur nicht zu befürchten.

In der Matrix-Entgasungseinrichtung 49 wird der nunmehr separierte aufgeschlossene Polyurethanschaum wieder aufgewärmt, und zwar bis er auf eine Temperatur von etwa 130°C kommt. Die Temperatur kann hier höher gehalten werden, als in der Ausgaseinrichtung 14, weil niedrig schmelzende Bestandteile wie Polystyrol oder dgl. bereits abgetrennt sind und eine Verklumpung des Materials nicht zu befürchten ist. In der Matrix-Entgasungseinrichtung 49 beträgt die Temperatur etwa 130° und die Verweildauer etwa 1,5 bis 3 Stunden. Im Gegenstrom wird das Material hier von einem Stickstoffstrom von etwa 10m³/h durchströmt, der von der Kühlschlange 72 abgegeben wird. Die Matrix-Entgasungseinrichtung schafft die Gelegenheit für in den Kunststoffen gelöste FCKW aus den Kunststoffteilen heraus zu diffundieren und von dem Trägergas mitgenommen zu werden. Das an dem Ausgang 62 abgegebene Polyurethanpulver ist weitgehend von flüchtigen Substanzen befreit.

Die vorgestellte Aufbereitungseinrichtung 1 gestattet eine Rückführung der in einem Kühlgerät enthaltenen flüchtigen Bestandteile, insbesondere FCKW, zu einem Prozentsatz, der über 95% liegen kann. Nahezu alle flüchtigen Substanzen werden erfasst. Es wird verhindert, dass diese in die Atmosphäre gelangen oder verloren gehen.

Die Effizienz der Aufbereitungseinrichtung 1 kann noch gesteigert werden, wenn zwischen die Leitungen 68 und 68 ein Wärmetauscher 95 geschaltet wird. Dieser erwärmt das über die Leitung 74 der Matrix-Entgasungseinrichtung 49 zuströmende Gas und kühlt das Gas in der Leitung 68 ab.

Die Zerkleinerungseinrichtung 1 dient in erster Linie dem Recycling von Kühlgeräten. Zu der Aufbereitungseinrichtung 1 gehört eine Zerkleinerungseinrichtung 2 und eine Ausgaseinrichtung 14. Letztere dient dazu, von der Zerkleinerungseinrichtung 2 abgegebenes Materialgemisch unter inerten Bedingungen abzukühlen, so dass das abgegebene Material zunächst nicht weiter ausgast. Auf diese Weise werden in den angeschlossenen Prozessstufen ungewollte Verluste flüchtiger Substanzen vermieden. Sowohl die Zerkleinerungseinrichtung als auch die Ausgaseinrichtung einschl. Kühlfördereinrichtung sind an eine Auffangeinrichtung 15 für die flüchtige Substanz angeschlossen. Durch die Inertisierung einer Abkühlstrecke, auf der das durch die Zerkleinerung und/oder nachfolgende Beheizung erwärmte Material unter inerten Bedingungen abkühlt, werden Verluste oder ungewollter Austritt von flüchtigen Substanzen aus dem System vermieden.

## Patentansprüche

1. Aufbereitungseinrichtung (1), insbesondere für Abfälle, die unterschiedliche flüchtige Stoffe enthalten,
mit einer Zerkleinerungseinrichtung (2), die einen Innenraum (9) aufweist, in dem wenigstens ein Zerkleinerungswerkzeug (8) angeordnet ist,
mit einer Ausgaseinrichtung (14), die einen Ausgasraum (19) für zerkleinertes, von der Zerkleinerungseinrichtung (2) abgegebenes Material aufweist, und
mit einer Auffangeinrichtung (15) zur Abführung und Sammlung von in der Zerkleinerungseinrichtung (2) und in dem Ausgasraum (19) freigesetzte flüchtige Stoffe.

2. Aufbereitungseinrichtung nach Anspruch 1, **dadurch gekennzeichnet, dass** die Zerkleinerungseinrichtung (2) zugleich eine Aufschlusseinrichtung zur Trennung der in den Abfällen vorhandenen, miteinander verbundenen Feststoffen ist.

3. Aufbereitungseinrichtung nach Anspruch 2, **dadurch gekennzeichnet, dass** Zerkleinerungseinrichtung (2) ein an dem unteren Ende des Innenraums (9) umlaufendes Schleuderwerkzeug (8) aufweist, um das in dem Innenraum (9) befindliche Material turbulent aufzuwirbeln.

4. Aufbereitungseinrichtung nach Anspruch 1, **dadurch gekennzeichnet, dass** zwischen der Zerkleinerungseinrichtung (2) und der Ausgaseinrichtung (14) eine Ausschleuseeinrichtung (12) angeordnet ist, um kontrolliert aufgeschlossenes Material aus dem Innenraum (9) in die Ausgaseinrichtung (14) zu übertragen.

5. Aufbereitungseinrichtung nach Anspruch 1, **dadurch gekennzeichnet, dass** zu der Ausgaseinrichtung (14) eine Kühleinrichtung (26) mit einem Kühlraum (19a) gehört.

6. Aufbereitungseinrichtung nach Anspruch 5, **dadurch gekennzeichnet, dass** der Kühlraum (19a) eine Kühlförderstrecke enthält.

7. Aufbereitungseinrichtung nach Anspruch 1, **dadurch gekennzeichnet, dass** die Auffangeinrichtung (15) eine Einrichtung zur Erzeugung einer inerten Atmosphäre in dem Innenraum (9) und in dem Ausgasraum (19) ist.

8. Aufbereitungseinrichtung nach Anspruch 7, **dadurch gekennzeichnet, dass** zu der Auffangeinrichtung (14) Zuleitungen (68, 71, 24, 86) zur Zuführung von Inertgas (N₂) und Rückleitungen (78) zur Ausleitung von Inertgas (N₂) und in dem Innenraum (9) sowie dem Ausgasraum (19) freigesetzten flüchtigen Stoffen gehören.

9. Aufbereitungseinrichtung nach Anspruch 1, **dadurch gekennzeichnet, dass** der Innenraum (9) und der Ausgasraum (19) von Inertgas (N₂) durchströmt sind.

10. Aufbereitungseinrichtung nach Anspruch 9, **dadurch gekennzeichnet, dass** das zerkleinerte Material in dem Ausgasraum (19) von dem Inertgas (N₂) im Gegenstrom durchströmt ist.

11. Aufbereitungseinrichtung nach Anspruch 1, **dadurch gekennzeichnet, dass** der Ausgasraum (19) der Ausgaseinrichtung (14) mit der Auffangeinrichtung (15) verbunden ist.

12. Aufbereitungseinrichtung nach Anspruch 1, **dadurch gekennzeichnet, dass** die Ausgaseinrichtung (14) eine Heizförderstrecke (25) aufweist.

13. Aufbereitungseinrichtung nach Anspruch 1, **dadurch gekennzeichnet, dass** in dem Ausgasraum (19) eine Fördereinrichtung (21) angeordnet ist, die eine Fördergeschwindigkeit aufweist, die derart auf die Länge des Förderwegs abgestimmt ist, dass die Verweildauer des zerkleinerten Materials in der Ausgaseinrichtung größer ist als eine Stunde.

14. Aufbereitungseinrichtung nach Anspruch 1, **dadurch gekennzeichnet, dass** zu der Auffangeinrichtung (15) wenigstens eine Kondensationseinrichtung (72, 73) gehört, die dazu dient, flüchtige Stoffe, die in dem aus dem Innenraum (9) und dem Ausgasraum (19) ausgeleiteten Inertgas (N₂) enthalten sind, zu verflüssigen und abzuscheiden.

15. Aufbereitungseinrichtung nach Anspruch 14, **dadurch gekennzeichnet, dass** die Kondensationseinrichtung (72, 73) Kühlflächen (72) aufweist, die mit dem Inertgas (N₂) in Berührung stehen.

16. Aufbereitungseinrichtung nach Anspruch 9, **dadurch gekennzeichnet, dass** das Inertgas (N₂) Stickstoff ist.

17. Aufbereitungseinrichtung nach Anspruch 1, **dadurch gekennzeichnet, dass** an die Ausgaseinrichtung (14) eine Trenneinrichtung (31) angeschlossen ist, die der Trennung der in dem zerkleinerten Material enthaltenen Bestandteile dient.

18. Aufbereitungseinrichtung nach Anspruch 17, **dadurch gekennzeichnet, dass** die Trenneinrichtung (31) Bestandteile in einen gesonderten Förderweg leitet, die noch flüchtige Substanzen enthalten.

19. Aufbereitungseinrichtung nach Anspruch 18, **dadurch gekennzeichnet, dass** der gesonderte Förderweg zu einer weiteren Entgasungseinrichtung (49) gehört.

20. Aufbereitungseinrichtung nach Anspruch 19, **dadurch gekennzeichnet, dass** die Matrixentgasungseinrichtung (49) einen beheizten Entgasungsraum (52) weist, dessen Temperatur höher ist, als die Temperatur der Ausgaseinrichtung (14).

21. Aufbereitungseinrichtung nach Anspruch 19, **dadurch gekennzeichnet, dass** die Entgasungseinrichtung (49) an die Auffangeinrichtung (15) angeschlossen ist.

22. Aufbereitungseinrichtung nach Anspruch 1, **dadurch gekennzeichnet, dass** von der Entgasungseinrichtung (49) abgegebenes Inertgas (N₂) in die Zerkleinerungseinrichtung (2) eingeleitet wird.

23. Verfahren zur Aufbereitung von Abfällen oder Altgeräten, insbesondere Kühlgeräten,
wobei bei dem Verfahren die Abfälle oder Altgeräte in inerter Spülatmosphäre zerkleinert werden,
nach der Zerkleinerung das erhaltene Produkt in inerter Spülatmosphäre gekühlt wird, und
dem zum Aufbau der inerten Spülatmosphäre verwendeten Spülgas gereinigt wird.

24. Verfahren nach Anspruch 23, **dadurch gekennzeichnet, dass** das Inertgas in ein oder mehreren Ausgasstrecken erst durch das zerkleinerte Material und dann durch die Zerkleinerungseinrichtung geführt wird.

25. Verfahren nach Anspruch 23, **dadurch gekennzeichnet, dass** die Zerkleinerung mit Öffnung der Poren und Freisetzung des in den Poren enthaltenen Gases in einer ersten Prozessstufe unter einer ersten Inertatmosphäre, die Entgasung oberflächlich gebundener Gase in einer zweiten Prozessstufe in einer zweiten Inertatmosphäre, und
die Entgasung matrix-residenter Gase in einer dritten Prozessstufe unter einer dritten Inertatmosphäre erfolgt und
dass die Inertatmosphären voneinander getrennt sind.

26. Verfahren nach Anspruch 25, **dadurch gekennzeichnet, dass** in der dritten Inertatmosphäre der geringste Gehalt freigesetzter Gase eingestellt wird.

27. Verfahren nach Anspruch 23, **dadurch gekennzeichnet, dass** das zerkleinerte Produkt in drei Stufen bei unterschiedlichen Temperaturen und Partialdrücken entgast wird.
